# FASCICULE DE BREVET EUROPEEN

(11) **EP 1 844 261 B1**
(45) Date de publication et mention de la délivrance du brevet: **11.05.2011**
(21) Numéro de dépôt: 06709392.2
(22) Date de dépôt: 06.01.2006
(51) Int. Cl.: F17C 13/12, F17C 5/00

(54) **NECESSAIRE ET DISPOSITIF DE RACCORDEMENT ET DE TRANSFERT DE FLUIDE ET UTILISATION D'UN TEL DISPOSITIF**
AUSRÜSTUNG UND VORRICHTUNG ZUR KUPPLUNG UND ÜBERTRAGUNG VON FLUID UND VERWENDUNG DER VORRICHTUNG
KIT AND DEVICE FOR CONNECTING AND TRANSFERRING FLUID AND THE USE OF SAID DEVICE

(30) Priorité: 26.01.2005 FR 0550222
(43) Date de publication de la demande: 17.10.2007
(73) Titulaire: L'AIR LIQUIDE, Société Anonyme pour l'Etude et l'Exploitation des Procédés Georges Claude, 75007 Paris (FR)
(72) Inventeur: ALLIDIERES, Laurent, F-38410 Uriage Les Bains (FR)
(74) Mandataire: De Cuenca, Emmanuel Jaime
(86) Numéro de dépôt international: PCT/FR2006/050004
(87) Numéro de publication internationale: WO 2006/079734

(56) Documents cités:
- WO-A-02/070934
- DE-U1- 9 406 232
- US-A- 4 099 551
- US-A- 5 921 266
- US-B1- 6 308 753

## Description

La présente invention concerne les dispositifs de raccordement et de transfert de fluide sous pression entre un réservoir donneur et une installation receveuse, typiquement pour le rechargement d'une réserve de fluide d'une installation stationnaire par un camion citerne.

La connexion entre le réservoir donneur et l'installation s'effectue par une tubulure de transfert, généralement appelée « flexible », dimensionnée pour le maximum entre la pression maximale de service (PMS) du réservoir donneur et la pression maximale de service du réservoir source, qui peut atteindre 500 bars et plus. Ce flexible est manipulé à chaque opération de connexion / déconnexion en subissant des cycles de pressurisation / dépressurisation importants, peut même être sujet à écrasement si un opérateur marche dessus ou un véhicule, notamment le camion citerne lui même, roule dessus lors de sa manoeuvre d'approche, et peut s'arracher en cas d'oubli de déconnexion lors d'une opération de remplacement du système. Cet équipement est donc particulièrement exposé et, bien qu'un soin extrême soit porté à sa fabrication, sa rupture est un élément probable qui doit être pris en considération. En effet, une rupture de flexible contenant du fluide sous pression, outre les effets mécaniques dits de « coup de fouet » qui peuvent gravement blesser un opérateur et / ou endommager des éléments de l'installation, peut se révéler très dangereux si le fluide de transfert est toxique et/ou inflammable.

Le document US-A-5921266 décrit un système de transfert de fluide conforme au préambule de la revendication 1. Cependant, le système de sécurité selon ce document US-A-5921266 nécessite un boîtier de contrôle qui détecte la pression au niveau des extrémités amont et aval du flexible et commande une vanne située en amont d'une pompe. Par ailleurs, un câble de contact formant un interrupteur est relié d'une part au boîtier de contrôle et, d'autre part, au conteneur de stockage. Lorsque le câble interrupteur se déconnecte du boîtier de commande (rupture du flexible par exemple) l'interrupteur est ouvert et actionne la fermeture de la valve en amont de la pompe pour limiter la sortie de fluide du réservoir du véhicule.

Un tel dispositif est cependant peu satisfaisant notamment en cas d'oubli de déconnexion du flexible après l'opération de transfert de fluide.

La présente invention a pour objet de proposer un véhicule comportant un dispositif de raccordement et de transfert de fluide sous pression sécurisé permettant à la fois de réduire l'effet « coup de fouet » et de limiter les risques d'échappement, notamment de feu, du gaz transféré en cas de rupture de la tubulure principale.

Pour ce faire, le véhicule selon l'invention comprend un réservoir donneur et un dispositif de raccordement et de transfert de fluide sous pression entre le réservoir donneur et une installation receveuse, comprenant une tubulure de transfert du fluide ayant une première extrémité raccordable à un raccord de sortie de fluide du réservoir et une deuxième extrémité raccordable à une entrée de fluide de l'installation receveuse, le réservoir comportant, en amont de la sortie de fluide, une vanne d'arrêt commandée ayant un raccord rapide de connexion avec une première extrémité d'une ligne auxiliaire ayant une deuxième extrémité raccordable à un circuit auxiliaire de l'installation receive. Selon l'invention la ligne auxiliaire est couplée, sur une partie de son extension, à la tubulure de transfert au moyen d'au moins un lien lâche ou coulissant de façon à s'étendre le long d'une partie substantielle de cette dernière et ayant sur cette distance de couplage une longueur inférieure à celle de la tubulure de transfert.

Selon d'autres caractéristiques de l'invention :
- la ligne auxiliaire est solidarisée en au moins deux points séparés à la tubulure principale de transfert
- la vanne d'arrêt commandée est une vanne pneumatique et la ligne auxiliaire est une tubulure secondaire de fluide basse pression, typiquement de l'azote ou de l'air sec, de commande d'instruments de l'installation receveuse
- la vanne d'arrêt commandée est une électrovanne et la ligne auxiliaire une ligne électrique
- le réservoir donneur est monté sur un véhicule, typiquement une remorqué de camion
- une capacité auxiliaire de fluide comprimé ou d'électricité, est associée au réservoir donneur et connectable au circuit auxiliaire de l'installation receveuse

La présente Invention concerne également l'utilisation d'un tel dispositif pour l'alimentation en gaz inflammable, notamment en hydrogène, d'une installation receveuse fixe.

La présente invention concerne également un nécessaire de raccordement pour un dispositif de raccordement et de transfert du type défini plus haut, comprenant une tubulure principale haute pression ayant des raccords d'extrémité et une tubulure secondaire en matériau plastique ayant des raccords d'extrémité et solidarisée en au moins deux zones distinctes espacées l'une de l'autre à la tubulure principale.

D'autres caractéristiques et avantages de l'invention ressortiront de la description suivante de modes de réalisation, donnés à titre illustratif, mais nullement limitatif, faite en relation avec les dessins annexés sur lesquels :
La figure 1 est une vue schématique d'un camion citerne pourvu d'un dispositif de raccordement et de transfert de fluide selon un mode de réalisation de l'invention ; et
La figure 2 est une vue schématique à plus grande échelle du mode de réalisation de la figure 1 montrant les connexions des lignes principales et secondaires au réservoir donneur et à l'installation receveuse.

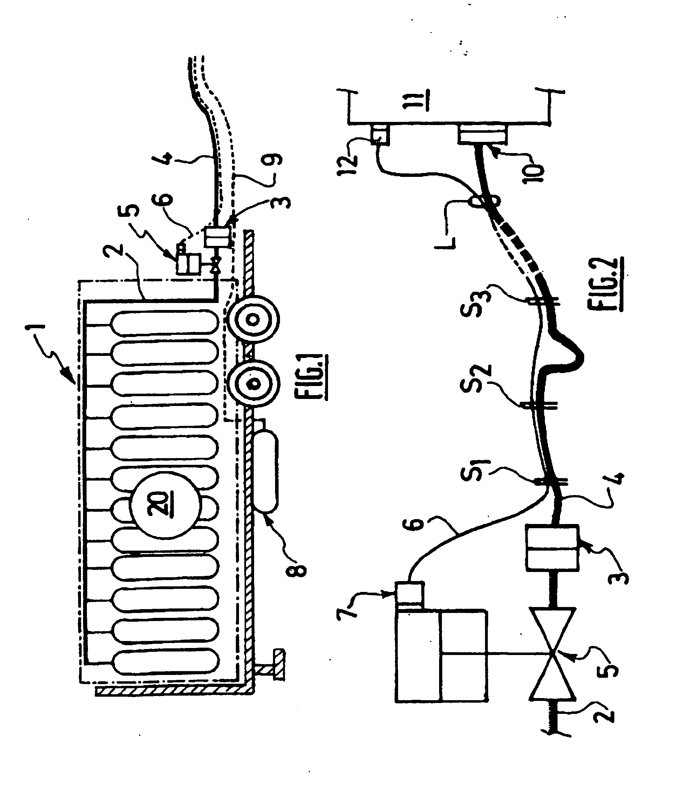

Dans le mode de réalisation de la figure 1 on a représenté une citerne routière haute pression comprenant plusieurs réservoirs 20 de stockage de gaz sous haute pression (supérieure à 160 bars, typiquement supérieure à 200 bars, avantageusement supérieure à 500 bars). Ces réservoirs débitent dans une conduite de sortie 2 se terminant par un élément d'un raccord haute pression 3 de raccordement à une tubulure de transfert amovible 4 et incorporant, en amont de cet élément de raccord, une vanne d'isolement ou d'arrêt 5 à actionneur pneumatique.

Dans le mode de réalisation représenté, la vanne 5 est une vanne pneumatique pilotée par un fluide basse pression acheminé par une tubulure auxiliaire 6 reliée à la vanne 5 par un raccord rapide arrachable 7.

Dans la pratique, le fluide acheminé par la tubulure secondaire 6 est un gaz sous faible pression (typiquement de l'azote ou de l'air sec à une pression de 6 à 10 bars) utilisé dans un réseau dédié de l'installation utilisatrice pour la commande et le pilotage des différents instruments de mesure ou d'actionnement de cette installation.

Le fluide instrument est disponible en provenance de l'installation utilisatrice elle-même et /ou en provenance d'un réservoir 8 embarqué dans la remorque du camion 1 et disponible via un flexible basse pression 9 connectable à l'installation utilisatrice. Le réservoir 8 est avantageusement repressurisé, quand nécessaire, à l'aide du groupe de compression d'air du tracteur de la remorque.

Dans le mode de réalisation représenté sur la figure 2, la tubulure principale 4, réalisée en PTFE armé ou gaine ondulée en Inox, est reliée, préférentiellement vissée, en aval à un raccord 10 d'entrée de l'installation utilisatrice 11 et la tubulure secondaire 6 est également reliée par un raccord rapide arrachable 12 au réseau de fluide instrument de l'installation utilisatrice 11.

Selon un aspect de l'invention, dans ce mode de réalisation, la tubulure secondaire 6 est réalisée en matériau à point de fusion bas, inférieur à 200°C, notamment en matériau thermoplastique fusible, par exemple en PVC, et est solidarisée en au moins deux points S1, S2, S3 à la tubulure principale 4 de façon à s'étendre le long de la majeure partie de cette dernière mais, comme représenté entre S2 et S3, en ayant une longueur développée inférieure à celle de la tubulure de transfert 4, la liaison entre les deux tubulures au niveau de la partie aval de la tubulure 4 s'effectuant au moyen d'un lien lâche ou coulissant L.

Dans le mode de réalisation, la vanne 5 est du type normalement fermée en cas de manque de pression dans la tubulure auxiliaire 6. On comprendra donc qu'en cas de rupture de la tubulure principale 4 dans sa partie amont, les premiers mouvements de fouet de ce dernier provoquent une forte traction sur la tubulure secondaire 6 entraînant l'ouverture du raccord rapide 7 et donc la fermeture quasi instantanée de la vanne 5, stoppant ainsi toute fuite. Par ailleurs, en cas de feu consécutif à une fuite de la tubulure principale 4, la tubulure secondaire 6 fond très rapidement et provoque de la même façon la fermeture rapide de la vanne 5 et donc l'extinction également rapide du feu.

En cas d'oubli par l'opérateur de déconnexion de la tubulure 4 après l'opération de transfert de fluide, la tubulure secondaire 6 est rapidement arrachée ce qui provoque la fermeture de la vanne 5 et limite donc toute fuite de gaz hors de la citerne automobile 1. En effet, la tubulure 6 étant plus courte entre S1 et S3 (partie longeant la tubulure 4) que la tubulure 4, en cas d'oubli de déconnexion par l'opérateur de la tubulure 4, la vanne 5, déconnectée de la ligne 6, se ferme avant la rupture de la tubulure 4, supprimant toute fuite à l'extérieur de gaz provenant des réservoirs 20.

Quoique l'invention ait été décrite en relation avec des modes de réalisation particuliers, elle ne s'en trouve pas limitée mais est susceptible de modifications et de variantes qui apparaîtront à l'homme du métier dans le cadre des revendications ci-après. En particulier, au lieu d'être à actionnement pneumatique, la vanne d'arrêt 5 peut être une électrovanne, la ligne auxiliaire de commande 6 étant dans ce cas un câble électrique terminé aux deux extrémités par des connecteurs à ouverture rapide 7 et 12, le circuit auxiliaire de l'installation receveuse 11 étant alors un circuit électrique de cette dernière, la batterie 8 de secours de la remorque 1 étant une batterie d'accumulateur. De même, dans ce cas de figure, la vanne 5 peut être actionnée à la fermeture par un organe de sécurité, par exemple un analyseur / détecteur de fuite monté à l'arrière de la remorque 1. Dans les deux cas, la vanne 5 peut en outre être fermée en urgence au moyen d'un bouton d'arrêt d'urgence, pneumatique ou magnétique. L'invention convient tout particulièrement pour les flottes de citernes alimentant en hydrogène gazeux sous une pression de plus de 160 bars des installations fixes, notamment de génération d'électricité, en particulier du type pile à combustible.

## Revendications

1. Véhicule comprenant un réservoir donneur (1) et un dispositif de raccordement et de transfert de fluide sous pression entre le réservoir donneur (1) et une installation receveuse (11) , le dispositif comprenant une tubulure (4) de transfert de fluide ayant une première extrémité raccordable à un raccord de sortie de fluide (3) du réservoir (1) et une deuxième extrémité raccordable à une entrée de fluide (10) de l'installation receveuse (11), le réservoir (1) comportant, en amont de la sortie de fluide (3), une vanne d'arrêt commandée (5) ayant un raccord rapide (7) de connexion avec une première extrémité d'une ligne auxiliaire (6) ayant une deuxième extrémité raccordable (12) à un circuit auxiliaire de l'installation (11) receveuse, **caractérisé en ce que** la ligne auxiliaire (6) est couplée, sur une partie de son extension, à la tubulure de transfert (4) au moyen d'au moins un lien lâche ou coulissant de façon à s'étendre le long d'une partie substantielle de cette dernière et ayant sur cette distance de couplage une longueur inférieure à celle de la tubulure de transfert.

2. Véhicule selon la revendication 1, **caractérisé en ce que** la ligne auxiliaire (6) est solidarisée en au moins deux points séparés (Si, L) à la tubulure de transfert (4).

3. Véhicule selon l'une des revendications 1 et 2, **caractérisé en ce que** la vanne d'arrêt commandée (5) est une électrovanne et la ligne auxiliaire une ligne électrique.

4. Véhicule selon l'une des revendications 1 et 2, **caractérisé en ce que** la vanne d'arrêt commandée (5) est une vanne pneumatique et **en ce que** la ligne auxiliaire est une tubulure secondaire de fluide basse pression de commande d'instruments de l'installation utilisatrice (11).

5. Véhicule selon la revendication 4, **caractérisé en ce que** la tubulure secondaire est en matériau à bas point de fusion.

6. Véhicule selon l'une des revendications précédentes, **caractérisé en ce qu'**il comporte une capacité auxiliaire (8), associée au réservoir (1) et connectable au circuit auxiliaire de l'installation.

7. Véhicule selon l'une des revendications précédentes, **caractérisé en ce que** le réservoir donneur est monté sur un véhicule.

8. Véhicule selon l'une quelconque des revendications précédentes, **caractérisé en ce que** la liaison entre les deux tubulures (3,4) au niveau de la partie aval de la tubulure (4) (aval c'est-à-dire du côté installation receveuse (11)) s'effectue au moyen d'un lien lâche ou coulissant (L).

9. Utilisation d'un véhicule selon l'une des revendications précédentes pour l'alimentation en gaz inflammable d'une installation fixe.

10. Utilisation selon la revendication 9, le gaz inflammable étant l'hydrogène.

11. Nécessaire de raccordement pour véhicule selon la revendication 5, comprenant une tubulure principale haute pression (4) ayant des raccords d'extrémité (3, 10) et une tubulure secondaire (6) en matériau plastique ayant des raccords d'extrémité (7; 12) et reliée en au moins deux zones distinctes espacées l'une de l'autre (Si;L) à la tubulure principale (4), la tubulure secondaire (6) étant couplée, sur une partie de son extension, à la tubulure principale (4) au moyen d'au moins un lien lâche ou coulissant, de façon à s'étendre le long d'une partie substantielle de cette dernière et ayant sur cette distance de couplage une longueur inférieure à celle de la tubulure de transfert.

12. Nécessaire selon la revendication précédente, **caractérisé en ce que** la liaison entre les deux tubulures (3,4) au niveau de la partie aval de la tubulure (4) s'effectue au moyen d'un lien lâche ou coulissant (L).

## Claims

1. Vehicle comprising a donor reservoir (1) and a device for connecting and transferring fluid under pressure between the donor reservoir (1) and a receiver installation (11), the device comprising a fluid transfer tube (4) having a first end that can be connected to a fluid outlet coupling (3) of the reservoir (1) and a second end that can be connected to a fluid inlet (10) of the receiver installation (11), the reservoir (1) comprising, upstream of the fluid outlet (3), a controlled shut-off valve (5) that has a quick coupling (7) for connecting to a first end of an auxiliary line (6) that has a second end (12) that can be connected to an auxiliary circuit of the receiver installation (11), **characterized in that** the auxiliary line (6) is coupled, along a part of its length, to the transfer tube (4) by means of a slack or sliding leash so that it runs along a substantial part of the latter and, over this coupling distance, is shorter in length than the transfer tube.

2. Vehicle according to Claim 1, **characterized in that** the auxiliary line (6) is secured to the transfer tube (4) at at least two separate points (Si, L).

3. Vehicle according to either of Claims 1 and 2, **characterized in that** the controlled shut-off valve (5) is an electrically operated valve and the auxiliary line is an electric line.

4. Vehicle according to either of Claims 1 and 2, **characterized in that** the control shut-off valve (5) is a pneumatic valve and **in that** the auxiliary line is a low-pressure secondary tube containing fluid for controlling instruments of the user installation (11).

5. Vehicle according to Claim 4, **characterized in that** the secondary tube is made of a material with a low melting point.

6. Vehicle according to one of the preceding claims, **characterized in that** it comprises an auxiliary supply (8), associated with the reservoir (1), and that can be connected to the auxiliary circuit of the installation.

7. Vehicle according to one of the preceding claims, **characterized in that** the donor reservoir is mounted on a vehicle.

8. Vehicle according to any one of the preceding claims, **characterized in that** the linkage between the two tubes (4, 6) at the level of the downstream part of the tube (4) (downstream that is to say on the receiving installation side (11)) is performed by means of a loose or sliding link (L).

9. Use of a vehicle according to one of the preceding claims for supplying flammable gas to a fixed installation.

10. Use according to Claim 9, the flammable gas being hydrogen.

11. Connecting kit for a vehicle according to Claim 5, comprising a high-pressure main tube (4) that has end couplings (3, 10) and a secondary tube (6) made of plastic that has end couplings (7; 12) and is connected to the main tube (4) at at least two mutually spaced and distinct zones (Si; L), the secondary tube (6) being coupled, over a part of its extension, to the main tube (4) by means of at least one loose or sliding link, in such a way as to extend along a substantial part of the latter and having over this coupling distance a smaller length than that of the transfer tube.

12. Kit according to the preceding claim, **characterized in that** the linkage between the two tubes (4, 6) at the level of the downstream part of the tube (4) is performed by means of a loose or sliding link (L).

## Patentansprüche

1. Fahrzeug, das einen Spendertank (1) und eine Druckfluidanschluss- und -übertragungsvorrichtung zwischen dem Spendertank (1) und einer Empfänger-Anlage (11) enthält, wobei die Vorrichtung einen Rohrstutzen (4) zur Fluidübertragung enthält, der ein erstes an einen Fluidausgangsanschluss (3) des Tanks (1) anschließbares Ende und ein zweites an einen Fluideingang (10) der Empfänger-Anlage (11) anschließbares Ende hat, wobei der Tank (1) vor dem Fluidausgang (3) ein gesteuertes Absperrventil (5) aufweist, das einen Schnellanschluss (7) zur Verbindung mit einem ersten Ende einer Hilfsleitung (6) hat, die ein zweites Ende (12) hat, das an einen Hilfskreislauf der Empfänger-Anlage (11) anschließbar ist, **dadurch gekennzeichnet, dass** die Hilfsleitung (6) über einen Teil ihrer Ausdehnung mit dem Übertragungs-Rohrstutzen (4) mittels mindestens einer losen oder gleitenden Verbindung gekoppelt ist, um sich entlang eines wesentlichen Teils dieses letzteren zu erstrecken, und über diese Kopplungsstrecke eine geringere Länge als der Übertragungs-Rohrstutzen hat.

2. Fahrzeug nach Anspruch 1, **dadurch gekennzeichnet, dass** die Hilfsleitung (6) an mindestens zwei getrennten Punkten (Sᵢ, L) fest mit dem Übertragungs-Rohrstutzen (4) verbunden ist.

3. Fahrzeug nach einem der Ansprüche 1 und 2, **dadurch gekennzeichnet, dass** das gesteuerte Absperrventil (5) ein Elektroventil und die Hilfsleitung eine elektrische Leitung ist.

4. Fahrzeug nach einem der Ansprüche 1 und 2, **dadurch gekennzeichnet, dass** das gesteuerte Absperrventil (5) ein pneumatisches Ventil ist, und dass die Hilfsleitung ein Sekundär-Rohrstutzen für ein Niederdruckfluid zur Steuerung von Geräten der Nutzungsanlage (11) ist.

5. Fahrzeug nach Anspruch 4, **dadurch gekennzeichnet, dass** der Sekundär-Rohrstutzen aus einem Werkstoff mit niedrigem Schmelzpunkt besteht.

6. Fahrzeug nach einem der vorhergehenden Ansprüche, **dadurch gekennzeichnet, dass** es einen Hilfsspeicher (8) aufweist, der dem Tank (1) zugeordnet und mit dem Hilfskreislauf der Anlage verbindbar ist.

7. Fahrzeug nach einem der vorhergehenden Ansprüche, **dadurch gekennzeichnet, dass** der Spendertank auf ein Fahrzeug montiert ist.

8. Fahrzeug nach einem der vorhergehenden Ansprüche, **dadurch gekennzeichnet, dass** die Verbindung zwischen den zwei Rohrstutzen (4, 6) im Bereich des hinteren Teils des Rohrstutzens (4) (hinten, d.h. auf der Seite der Empfänger-Anlage (11)) mittels einer losen oder gleitenden Verbindung (L) erfolgt.

9. Verwendung eines Fahrzeugs nach einem der vorhergehenden Ansprüche zur Versorgung einer ortsfesten Anlage mit entzündbarem Gas.

10. Verwendung nach Anspruch 9, wobei das entzündbare Gas Wasserstoff ist.

11. Anschlussausrüstung für ein Fahrzeug nach Anspruch 5, die einen Hochdruck-Hauptrohrstutzen (4) mit Endanschlüssen (3, 10) und einen Sekundär-Rohrstutzen (6) aus Kunststoff enthält, der Endanschlüsse (7; 12) hat und in mindestens zwei unterschiedlichen, voneinander entfernten Zonen (Sᵢ; L) mit dem Hauptrohrstutzen (4) verbunden ist, wobei der Sekundär-Rohrstutzen (6) über einen Teil seiner Ausdehnung mit dem Hauptrohrstutzen (4) mittels mindestens einer losen oder gleitenden Verbindung gekoppelt ist, um sich entlang eines wesentlichen Teils dieses letzteren zu erstrecken, und über diese Koppelstrecke eine geringere Länge als diejenige des Übertragungs-Rohrstutzens hat.

12. Ausrüstung nach dem vorhergehenden Anspruch, **dadurch gekennzeichnet, dass** die Verbindung zwischen den zwei Rohrstutzen (4, 6) im Bereich des hinteren Teils des Rohrstutzens (4) mittels einer losen oder gleitenden Verbindung (L) erfolgt.
